# EUROPEAN PATENT APPLICATION

(11) **EP 2 428 881 A2**
(43) Date of publication of application: **14.03.2012**
(21) Application number: 10772255.5
(22) Date of filing: 04.05.2010
(51) Int. Cl.: G06F 3/042, H04B 1/38

(54) **INPUT DEVICE FOR MOBILE PHONE**

(30) Priority: 04.05.2009 KR 20090038854
(71) Applicant: Samsung Electronics Co., Ltd., Suwon-si, Gyeonggi-do 443-742 (KR)
(72) Inventor: CHOI, Kwang-Cheol, Gwacheon-si Gyeonggi-do 427-802 (KR)
(74) Representative: Jenkins, Richard Gavin
(86) International application number: PCT/KR2010/002847
(87) International publication number: WO 2010/128795

(57) **Abstract**

An input apparatus of a portable terminal is provided. The input apparatus includes a frame in which a light emitting element, configured to emit an infrared ray in a straight line into an external void space, and a light receiving element, positioned to face opposite to the light emitting element and configured to detect the infrared ray to output a signal, are arranged, and a controller configured to receive the signal outputted from the light receiving element to detect a coordinate value, wherein the light receiving element detects only when the infrared ray, which is emitted from the light emitting element toward the external void space to proceed in the straight line, is reflected by an object.

## Description

### BACKGROUND OF THE INVENTION

### 1. Field of the Invention

The present invention relates to an input apparatus of a portable terminal. More particularly, the present invention relates to an input apparatus of a portable terminal that uses an infrared ray to output an input signal based on a non-contact.

### 2. Description of the Related Art

Generally, an input apparatus is a apparatus for entering a data into a terminal. Recently, a touch screen, which is easy to enter an input, is widely used for the input apparatus due to development and popularization of a graphic user interface (GUI) system. The touch screen, which is a new input method that can replace other input apparatuss such as a mouse and a keyboard, is currently applied to countless different fields including personal digital assistants (PDAs), liquid crystal displays (LCDs), banks and government offices, various medical equipment, guides for tourist and major institution information, and transportation guides.

The touch screen includes a resistive-type touch screen in which sensor lines that respond to a pressure applied to a surface of a screen are densely installed, thereby detecting a coordinate of a touch location when pressed. Also, the touch screen further includes a capacitive-type touch screen in which, in order to increase precision of the touch screen to be greater than that of the resistive-type touch screen, electrons (a current flow) are charged on the surface of the screen and sensors are installed on a circumference thereof, wherein the touch location is detected based on an amount of lost electrons when touched.

Generally, the resistive-type touch screen and the capacitive-type touch screen output a corresponding input signal when a corresponding touch area is touched by a finger. In this case, a frequent input operation by contact to the touch area of the touch screen can contaminate or damage the touch area.

### SUMMARY OF THE INVENTION

An aspect of the present invention is to solve at least the above-mentioned problems and/or disadvantages and to provide at least the advantages described below. Accordingly, an aspect of the present invention is to provide an input apparatus of a portable terminal that uses an infrared ray to output an input signal based on a non-contact.

Another aspect of the present invention is to provide an input apparatus of a portable terminal that can prevent damage to a screen by a frequent contact in a portable terminal to which a touch screen is to be applied.

Another aspect of the present invention is to provide an input apparatus of a portable terminal that enhances aesthetic appeal of a portable terminal.

In accordance with an aspect of the present invention, an input apparatus of a portable terminal comprises a frame in which a light emitting element, configured to emit an infrared ray in a straight line into an external void space, and a light receiving element, positioned to face opposite to the light emitting element and configured to detect the infrared ray to output a signal, are arranged, and a controller configured to receive the signal outputted from the light receiving element to detect a coordinate value, wherein the light receiving element detects only when the infrared ray, which is emitted from the light emitting element toward the external void space to proceed in the straight line, is reflected by an object.

In accordance with another aspect of the present invention, an input apparatus of a portable terminal having a display comprises: a light emitting element, installed on a circumference of the display to direct an infrared ray at an acute angle to proceed in a straight line above a surface of the display, and a light receiving element, positioned to face opposite to the light emitting element and configured to detect the infrared ray to output a signal, and a controller configured to receive the signal outputted from the light receiving element to detect a coordinate value and configured to determine an item selected from character or picture information already shown in a screen of the display and controls to perform a corresponding operation.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 is a perspective view illustrating a portable terminal according to an exemplary embodiment of the present invention;
FIG. 2 is exploded and assembled perspective views illustrating an input apparatus according to an exemplary embodiment of the present invention;
FIG. 3 is a front view taken along line A-A of the input apparatus shown in FIG. 2(b);
FIG. 4 is a conceptual view for explaining a principle of detecting a touch coordinate (x, y) in an input apparatus according to an exemplary embodiment of the present invention;
FIG. 5 is an exploded perspective view illustrating an input apparatus according to another exemplary embodiment of the present invention;
FIG. 6 is an assembled perspective view illustrating an input apparatus according to another exemplary embodiment of the present invention;
FIG. 7 is a front view taken along line A-A of the input apparatus shown in FIG. 6; and
FIG. 8 is a perspective view illustrating essential parts of an input apparatus according to another exemplary embodiment of the present invention.

### DETAILED DESCRIPTION OF EXEMPLARY EMBODIMENTS

Exemplary embodiments of the present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on user's or operator's intension and usage. That is, the terms used herein must be understood based on the descriptions made herein.

The present invention relates to a technology for an input apparatus of a portable terminal for outputting an input signal based on a non-contact.

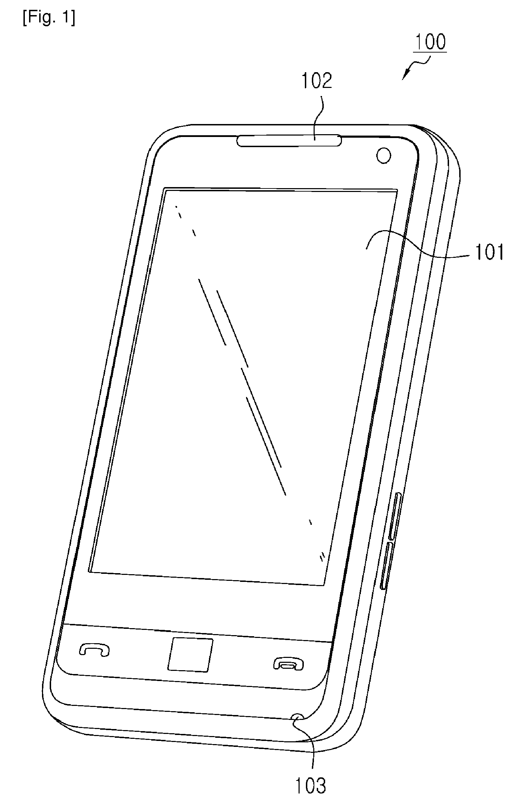

FIG. 1 is a perspective view illustrating a portable terminal according to an exemplary embodiment of the present invention.

Referring to FIG. 1, a portable terminal 100 includes a touch screen 101, a speaker (or receiver) 103 positioned on an upper portion of the touch screen 101, and a microphone 103 positioned on a lower portion of the touch screen 101. The speaker (or receiver) 103 and the microphone 104 are already known and a detailed description thereof will be omitted. Particularly, the touch screen 101 includes a display apparatus such as, for example, a liquid crystal display (LCD) or a plasma display panel (PDP), and, in addition to the display apparatus, an input apparatus according to the present invention, which can output an input signal corresponding to a position of a non-contact gesture of a hand. Moreover, in addition to the display apparatus, the touch screen 101 can further include a general resistive type or capacitive type touch panel to receive a position of a hand touch. In other words, the touch screen 101 can output the input signal based on a contact and a non-contact gestures.

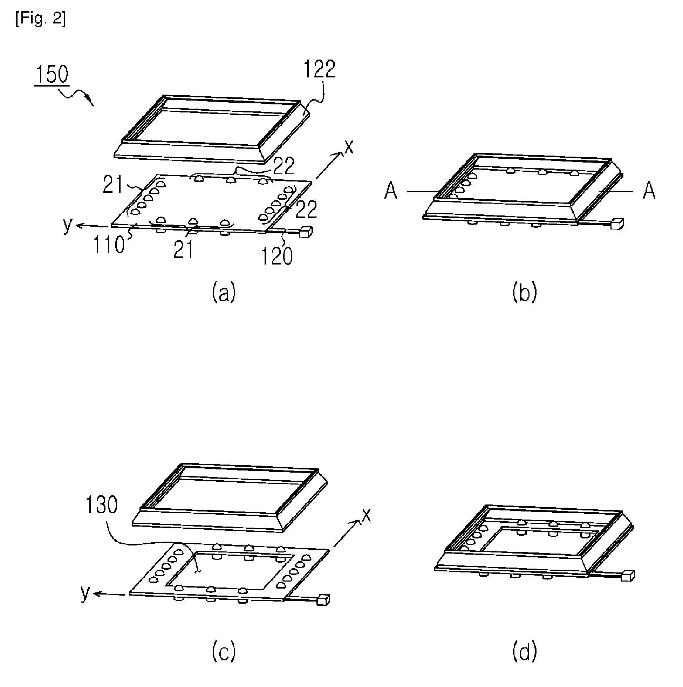

FIG. 2 is exploded and assembled perspective views illustrating an input apparatus according to an exemplary embodiment of the present invention. FIG. 2(a) is an exploded perspective view illustrating an input apparatus according to the exemplary embodiment of the present invention, FIG. 2(b) is a corresponding assembled perspective view thereof, FIG. 2(c) is an exploded perspective view illustrating an input apparatus according to another exemplary embodiment of the present invention, and FIG. 2(d) is a corresponding assembled perspective view thereof.

Referring to FIG. 2, an input apparatus 150 includes a frame 110, which comprises a printed circuit board (PCB) on which a controller for performing an overall control is mounted, and a connector 120 for electrically connecting to a corresponding appliance to which the input apparatus 150 is applied. The connector 120 can comprise another PCB and the controller. The frame 110 shown in FIG. 2 has a rectangular shape; however, the present invention is not limited to this example. In addition, the frame 110 can have an opening 130 in a center thereof, as shown in FIG. 2(c). The frame 110 includes various electronic components and respective circuits therefor. Particularly, the frame 110 has a light emitting element 21 for emitting an infrared ray that travels in a straight line and a light receiving element 22 for detecting the infrared ray created by the light emitting element 21, wherein the light receiving element 22 is configured to face opposite to the light emitting element 21. The light emitting element 21 and the light receiving element 22 have an arrangement that has a lattice structure in which virtual lines connecting the light emitting element 21 and the light receiving element 22 are crossed with each other to form an intersection point. For example, a plurality of the light emitting elements 21 are arranged in a row leading from an upper left portion of the frame 110 having the rectangular shape to a lower right portion thereof. In addition, the plurality of the light receiving elements 22 are arranged in a row in an upper right portion of the frame 110 having the rectangular shape, in opposite to the light emitting element 21. When the light receiving element 22 detects the infrared ray, the light receiving element 22 outputs a light receiving signal which is predefined with respect to a coordinate value. In general, the coordinate value is associated with a position in which the light receiving element 22 is arranged. For example, the light receiving element 22 arranged on a right side of the rectangular frame 110 can output the light receiving signal of which X coordinate is increased in an upward direction. In addition, the light receiving element 22 arranged on an upper side of the rectangular frame 110 can output the light receiving signal of which Y coordinate is increased in a left direction. Therefore, the controller can detect the coordinate value based on the light receiving signal received respectively from two light receiving elements on the right and upper sides.

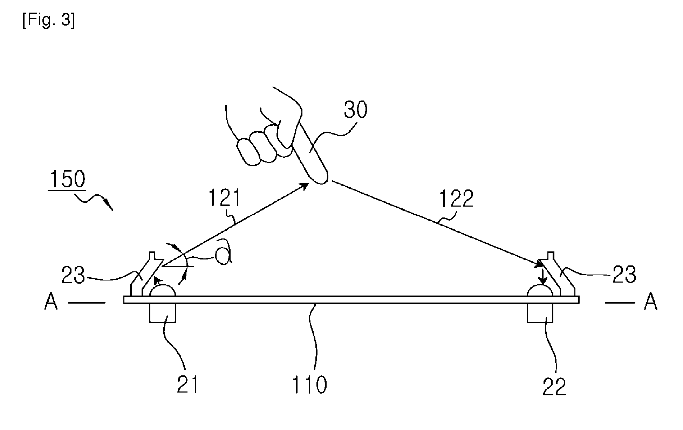

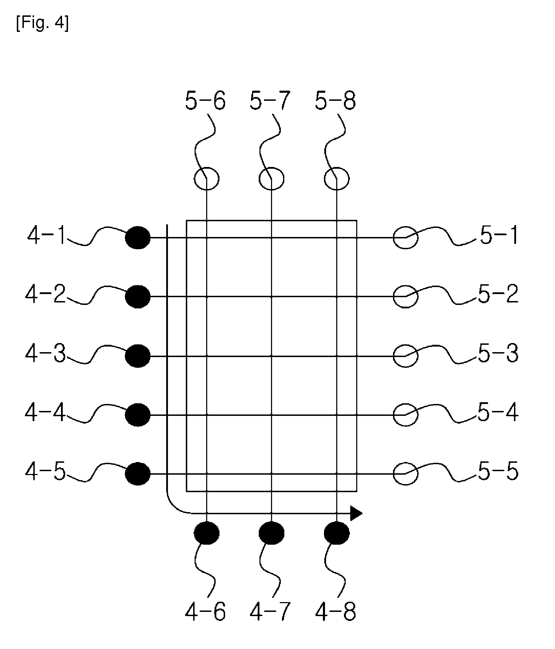

In addition, the input apparatus 150 according to an exemplary embodiment of the present invention includes a reflection plate 23 mounted on an upper portion of the frame to reflect the infrared ray emitted from the light emitting element 21 toward an outside and to reflect an external infrared light such that the reflected external infrared light is incident on the light receiving element. Alternatively, without using the reflection plate 23, the light emitting element 21 can directly emit a light toward the outside. Further, without using the reflection plate 23, the light receiving element 22 can receive the infrared ray directly from the outside. Moreover, the reflection plate 23 can be configured by selecting from the light emitting element 21 and the light receiving element 22, and a non-selected light emitting element can directly direct the infrared ray to the outside or receive the external infrared light being directly incident thereon. Hereinafter, an operation of detecting a coordinate of the input apparatus according to the present invention will be described in more detail with reference to FIGS. 3 and 4.

FIG. 3 is a view illustrating a cross section of taken along line A-A of the input apparatus shown in FIG. 2(b).

Referring to FIG. 3, the infrared ray emitted from the infrared light emitting element 21 passes through the reflection plate 23 to be reflected at a predetermined angle α relative to the frame 110 and proceeds in a straight line 121 toward the outside. In this case, an object such as a finger 30 reflects a part or all of the infrared ray that proceeds in the straight line into a direction toward a corresponding light receiving element 22 on an opposite side. The infrared ray reflected by the object is again reflected by the reflection plate 23 to be incident on the light receiving element 22. The light receiving element 22, upon detecting the infrared ray reflected by the object, outputs, to the controller, the light receiving signal with respect to the coordinate value of the object relative to the X axis or the Y axis. The controller can match in advance a corresponding coordinate value with each light receiving element and determine the light receiving element, which detects the infrared ray based on the corresponding light receiving signal, and outputs the corresponding coordinate value. In other words, the controller identifies a touch coordinate value based on the received light receiving signal. In addition, the controller can commence a subsequent light emission of the light emitting element and activate only the light receiving element corresponding to the commenced light emitting element to detect the infrared ray. Particularly, the input apparatus 150 can be implemented as an overlay on a screen of the display apparatus such as, for example, the liquid crystal display (LCD). In other words, an appliance comprising the display apparatus can determine a selected item between character or picture information already displayed on the screen based on the coordinate value detected by the controller of the input apparatus 150.

As already described above, the controller can detect the coordinate value precisely by arranging a pair of sensors, comprising the light emitting element and the corresponding light receiving element thereof, in the lattice structure relative to the X-axis and the Y axis. It should be noted that the input apparatus 150 can output a touch input signal with respect to the coordinate value based on a non-contact, compared to the resistive type and capacitive type touch panels in which the input signal is outputted with respect to the coordinate value based on a contact.

FIG. 4 is a conceptual view for explaining a principle of detecting a touch coordinate (x, y) in an input apparatus according to an exemplary embodiment of the present invention.

Referring to FIG. 4, a matrix is formed by placing the infrared light emitting element and the light receiver element to face each other. In the input apparatus, the touch coordinate is recognized by detecting the infrared ray, which is reflected into a space within this matrix by a predetermined angle to proceed in a straight line and is again reflected by the object such as the finger, according to the present invention.

The light emitting element is subsequently illuminated in an order of, for example, a light emitting element 4-1 -> a light emitting element 4-2 -> a light emitting element 4-3 -> a light emitting element 4-4 -> a light emitting element 4 -5 -> a light emitting element 4-6 -> a light emitting element 4-7 -> a light emitting element 4-8. Here, during when each light emitting element is operated, each light receiving element corresponding to the each light emitting element can be subsequently operated to detect the light receiving signal associated with the touch coordinate.

Namely, the touch coordinate on the X axis is detected by the light emitting elements 4-1, 4-2, 4-3, 4-4 and 4-5 positioned on a left side and the corresponding light receiving elements 5-1, 5-2, 5-3, 5-4 and 5-5 positioned on a right side. Further, the touch coordinate on the Y axis is detected by the light emitting elements 4-6, 4-7 and 4-8 positioned on the lower portion and the corresponding light receiving elements 5-6, 5-7 and 5-8 positioned on the upper portion. That a corresponding light receiving element detects the light receiving signal means that the infrared ray emitted from a corresponding light emitting element and randomly reflected to proceed in the straight line toward the outside is again reflected by the object such as the finger and is incident on the light receiving element. Further, that the corresponding light receiving element does not detect the light receiving signal means that the infrared light emitted from the corresponding light emitting element and reflected to proceed in the straight line toward the outside is constant.

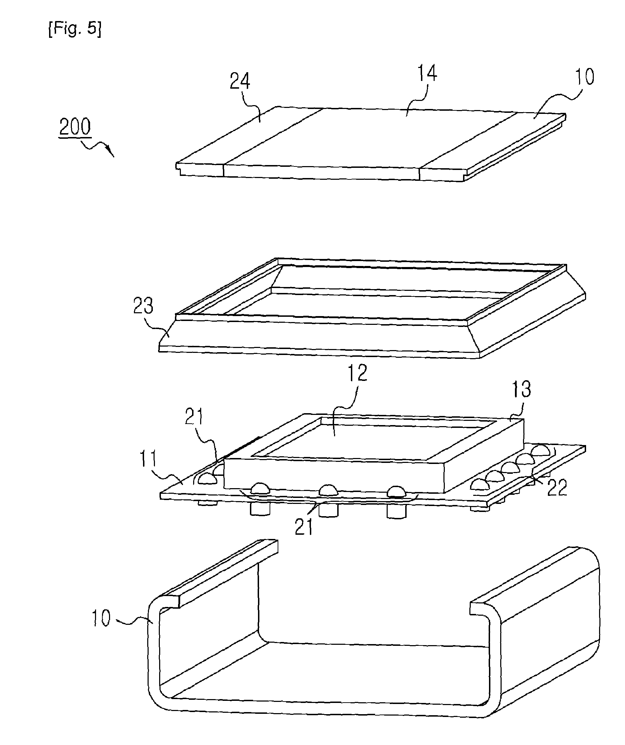

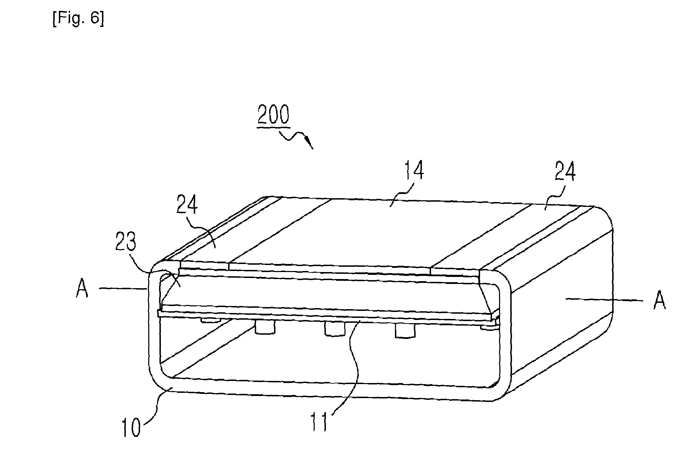

FIG. 5 is an exploded perspective view illustrating an input apparatus according to another exemplary embodiment of the present invention, and FIG. 6 is an assembled perspective view illustrating an input apparatus according to another exemplary embodiment of the present invention.

Referring to FIGS. 5 and 6, the input apparatus 200 includes a case frame 10, which forms an exterior of the portable terminal, and a printed circuit board 11 positioned in an interior of the case frame 10, wherein various electronic components, circuits for the electronic components and an LCD apparatus 12 for data output are mounted on the PCB 11.

The PCB 11 includes the controller that performs the overall control of the portable terminal. Particularly, the PCB 11 includes a plurality of the infrared light emitting elements 21, which are installed to surround two sides of the LCD 12, the two sides being perpendicular to each other, and emit the infrared ray in the straight line and a plurality of the light receiving unit 22 that surround the other two sides of the LCD 12 and face opposite to each of the infrared light emitting elements 21. As will be described below, the light receiving element 22 must detect only the infrared ray created by the corresponding light emitting element 21. In other words, the light receiving element 22 should not be exposed to, for example, a scattered light of a light emitted from a neighboring light emitting element, an ambient natural light, or a lamp light so as not to output an erroneous detection signal. To this end, the light receiving element 22 can be configured to detect only an infrared pulse light having a certain frequency and the corresponding light emitting element can be configured to generate the infrared pulse light having the certain frequency. In other words, the light receiving element 22 is configured not to detect, in the first place, any ambient light other than a pulse light having the certain frequency generated from the light emitting element. Moreover, a light blocking wall (not shown) may be formed between the respective light emitting elements 21 or between the respective light receiving elements 22 to reduce interference therebetween. In addition, the LCD 12 can have a light blocking wall 13 to prevent an influx of the infrared ray emitted from the infrared light emitting element 21. Preferably, the light emitting element 21 does not emit the infrared ray into an unwanted area, i.e., other components such as, for example, the LCD 12.

Further, the input apparatus 200 includes a reflection plate 23 which decides a reflection angle of light from the infrared ray emitting element 21 and the light receiving element 22. The infrared ray emitted from the infrared ray emitting element 21 is reflected toward the outside to proceed in the straight line with a certain angle with respect to the surface of the LCD 12 via the reflection plate 23. Further, the infrared ray, which is reflected toward the outside to proceed in the straight line and is again reflected by the object such as the finger, is reflected by the reflection plate 23 toward the corresponding light receiving element 22. Alternatively, without using the reflection plate 23, the light emitting element 21 may emit a light to the outside directly. Further, the light receiving element 22 may directly receive an infrared ray from the outside without using the reflection plate 23. Moreover, the reflection plate 23 can be configured by selecting from the light emitting element 21 and the light receiving element 22 and a non-selected light emitting element can directly direct the infrared light to the outside or receive the external infrared light being directly incident thereon.

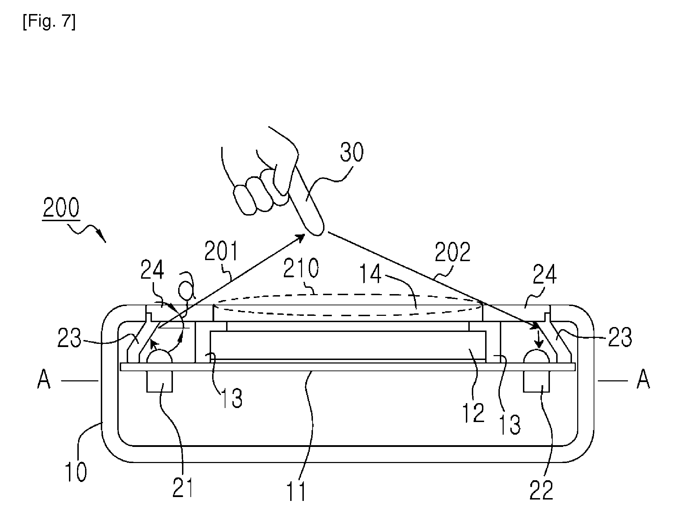

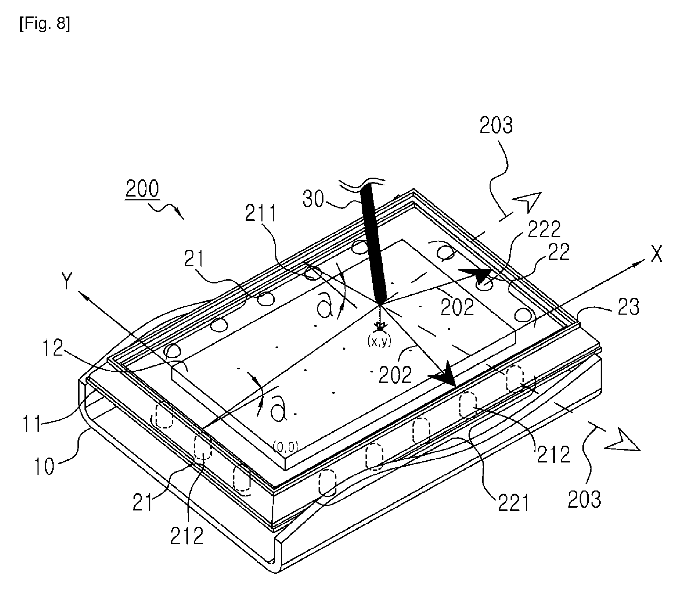

In addition, the input apparatus 200 includes a transparent glass 14 for protecting the LCD 12 from an external. Particularly, the transparent glass 14 comprises an infrared filter 24 for blocking a visible light to cover a component such as the infrared light emitting element 21 or the reflection plate 23. Therefore, since the visible light is blocked by the infrared filter 24, the component such as the infrared light emitting element 21 or the reflection plate 23 is not visible to the user. Preferably, the transparent glass 14 comprising the infrared filter 24 is not protruding or recessed from the case frame 11. In other words, an exposed surface of the transparent glass 14 and an exposed surface of the casing frame 11 are identical. Therefore, the portable apparatus can have an aesthetic outer appearance. According to the present invention, an input operation of the input apparatus 200 according to the present invention will be described in detail in FIGS. 7 and 8.

FIG. 7 is a cross sectional view taken along line A-A of the input apparatus shown in FIG. 6.

Referring to FIG. 7, the infrared ray emitted from the infrared light emitting element 21 passes through the reflection plate 23 to be reflected at a predetermined angle α relative to the LCD 12. The infrared ray reflected by the reflection plate 23 at the predetermined angle passes through the infrared filter 24 of the transparent glass 14 to proceed in the straight line toward the outside. Here, the object such as the finger reflects a part or all of the infrared ray, which proceeds in the straight line, at the predetermined angle α toward the infrared light receiving element 22 on the opposite side. The infrared ray reflected by the object passes through the infrared filter 24 to be reflected by the reflection plate 23 and incident on the light receiving element 22. The light receiving element 22 detects the infrared ray reflected by the object and outputs the light receiving signal with respect to the touch coordinate value relative to the X axis or the Y axis. Namely, by arranging multiple pairs of sensors, comprising the light emitting element and the corresponding light receiving apparatus thereof, in a lattice structure with respect to the X axis and the Y axis, a precise light receiving signal can be output based on the touch coordinate value. Next, the controller of the portable terminal can detect the touch coordinate value based on the light receiving signal received from the corresponding light receiving element of the input apparatus according to the present invention. Next, the controller determines an item selected from the character or picture information already displayed on the LCD 12 according to the detected touch coordinate value and controls to perform a corresponding operation. Also, as described already with reference to FIG. 4, the controller commences the subsequent illumination of the light emitting elements and activates only the light receiving element corresponding to the commenced light emitting element to detect the infrared ray. Further, the controller can match the corresponding coordinate value with the respective light receiving element in advance, identify the light receiving element that detects the infrared ray based on the corresponding light receiving signal, and detect the corresponding coordinate value.

In addition, as shown in FIG. 7, the object that contacts a surface 210 of the transparent glass 14 can only block a light and cannot detect the touch coordinate in the input apparatus according to the present invention. Therefore, the transparent glass 14 can be configured as a typical resistive type or capacitive type touch panel to detect the touch coordinate based on the contact.

FIG. 8 is a perspective view illustrating essential parts of an input apparatus according to another exemplary embodiment of the present invention.

Referring to FIG. 8, an infrared ray 203 emitted from the infrared light emitting element 21 passes through the reflection plate 23 to be reflected at the predetermined angle α relative to the LCD 12 to proceed toward the outside. The object 30 such as the finger reflects the infrared ray reflected toward the outside so as to be detected by the corresponding light receiving element positioned on the X axis and the Y axis. Here, upon detecting the infrared ray, the light receiving elements 22 output the light receiving signal corresponding to the coordinate value with respect to the X axis and the Y axis, and the portable terminal can detect the touch coordinate (x, y) based on the light receiving signal received from two light receiving elements. Here, two light receiving signals 221 and 222 for outputting the light receiving signal detect only the infrared ray created by corresponding light emitting elements 211 and 212.

In conclusion, the input apparatus of the portable terminal according to the present invention has an aesthetic outer appearance and can output an input signal based on a non-contact.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. An input apparatus of a portable terminal, the input apparatus comprising:
a frame in which a light emitting element, configured to emit an infrared ray in a straight line into an external void space, and a light receiving element, positioned to face opposite to the light emitting element and configured to detect the infrared ray to output a signal, are arranged; and
a controller configured to receive the signal outputted from the light receiving element to detect a coordinate value, wherein the light receiving element detects only when the infrared ray, which is emitted from the light emitting element toward the external void space to proceed in the straight line, is reflected by an object.

2. The input apparatus according to claim 1, wherein the light emitting element and the light receiving element facing opposite to the light emitting element are arranged in a lattice structure.

3. The input apparatus according to claim 1 or 2, wherein the light receiving element is arranged in a row on an X axis and a Y axis in an X-Y perpendicular plane.

4. The input apparatus according to any one of claims 1 to 3, wherein the light receiving element outputs a predefined light receiving signal with respect to the coordinate value according to an arrangement position thereof.

5. The input apparatus according to any one of claims 1 to 3, wherein the light emitting element is subsequently illuminated and, when a corresponding light emitting element initiates to be illuminated, a corresponding light receiving element detects the infrared ray.

6. The input apparatus according to any one of claims 1 to 6, wherein the input apparatus is connected to other appliance and the coordinate value detected by the controller is provided to a connected corresponding appliance.

7. The input apparatus according to claim 6, wherein the frame has an opening in a center thereof and is overlaid on a screen of the corresponding appliance.

8. The input apparatus according to claim 6, wherein the frame has an opening in a center thereof and is overlaid on a screen of the corresponding appliance, and wherein
the frame is not protruded from a case frame that forms an outer appearance of the corresponding appliance.

9. The input apparatus according to claim 7 or 8, wherein the appliance equipped with the screen receives the coordinate value from the input apparatus to determine an item selected from character or picture information already shown in the screen and performs a corresponding operation.

10. The input apparatus according to claim 1, wherein the light receiving element detects only an infrared pulse light having a certain frequency and is not responsive to other light.

11. The input apparatus according to claim 10, wherein the light emitting element generates the infrared ray corresponding to a frequency characteristic of the light receiving element.

12. The input apparatus according to claim 1, further comprising:
a reflection plate for reflecting the infrared ray emitted from the light emitting element into the external void space.

13. The input apparatus according to claim 1, further comprising:
a reflection plate for reflecting an infrared ray that proceeds from an outside in the straight line such that the reflected infrared ray is incident on the light receiving element.

14. The input apparatus according to claim 1, wherein the light emitting element directly directs the infrared ray into the external void space in the straight line.

15. The input apparatus according to claim 1, wherein the light receiving element directly receives the infrared ray reflected by the object.

16. An input apparatus of a portable terminal having a display, the input apparatus comprising:
a light emitting element, installed on a circumference of the display to direct an infrared ray at an acute angle to proceed in a straight line above a surface of the display, and a light receiving element, positioned to face opposite to the light emitting element and configured to detect the infrared ray to output a signal; and
a controller configured to receive the signal outputted from the light receiving element to detect a coordinate value and configured to determine an item selected from character or picture information already shown in a screen of the display and controls to perform a corresponding operation.

17. The input apparatus according to claim 16, wherein the light receiving element detects only when the infrared ray, which is emitted from the light emitting element to proceed in the straight line, is reflected by an object.

18. The input apparatus according to claim 16, wherein the display, the light emitting element, and the light receiving element are mounted on a same printed circuit board (PCB).

19. The input apparatus according to claim 16, wherein the light emitting element and the light receiving element facing opposite to the light emitting element are arranged in a lattice structure.

20. The input apparatus according to claim 16 or 19, wherein the light receiving element is arranged in a row on an X axis and a Y axis in an X-Y perpendicular plane.

21. The input apparatus according to any one of claims 16 to 20, wherein the light receiving element outputs a predefined light receiving signal with respect to the coordinate value according to an arrangement position thereof.

22. The input apparatus according to any one of claims 16 to 20, wherein the light emitting element is subsequently illuminated and, when a corresponding light emitting element initiates to be illuminated, a corresponding light receiving element detects the infrared ray.

23. The input apparatus according to claim 16, wherein the light receiving element detects only an infrared pulse light having a certain frequency and is not responsive to other light.

24. The input apparatus according to claim 23, wherein the light emitting element generates the infrared ray corresponding to a frequency characteristic of the light receiving element.

25. The input apparatus according to claim 16, further comprising:
a reflection plate for reflecting the infrared ray emitted from the light emitting element into an external void space.

26. The input apparatus according to claim 25, further comprising:
a transparent glass positioned on the display.

27. The input apparatus according to claim 26, wherein the transparent glass comprises an infrared filter configured to block a visible light and configured to allow the infrared ray to pass therethrough, in order for components including the light emitting element, the light receiving element and the reflection plate to be invisible from an outside.

28. The input apparatus according to claim 16 or 26, further comprising:
a light blocking wall installed on the display to block the infrared ray.

29. The input apparatus according to claim 27, wherein an exposed surface of the transparent glass is horizontally matched with a surface of a case frame that forms an outer appearance of the portable terminal.

30. The input apparatus according to claim 16, further comprising:
a reflection plate for reflecting the infrared ray that proceeds from an outside in the straight line such that the reflected infrared ray is incident on the light receiving element.

31. The input apparatus according to claim 16, wherein the light emitting element directly directs the infrared ray into an external void space.

32. The input apparatus according to claim 16, wherein the light receiving element directly receives the infrared ray reflected by the object.

33. The input apparatus according to claim 26, wherein the transparent glass is a resistive type or a capacitive type touch panel and is configured to output, to the controller, the signal with respect to the coordinate value based on a contact.

34. The input apparatus according to claim 33, wherein the controller controls to selectively use the signal output from the light receiving element and the signal output from the touch panel.
